# EUROPÄISCHE PATENTANMELDUNG

(11) **EP 3 388 182 A1**
(43) Veröffentlichungstag der Anmeldung: **17.10.2018**
(21) Anmeldenummer: 17020342.6
(22) Anmeldetag: 08.08.2017
(51) Int. Cl.: B23K 9/12, B23K 35/02

(54) **SCHWEISSDRAHT, SCHWEISSVORRICHTUNG, VERFAHREN ZUM SCHWEISSEN, HERSTELLUNGSVERFAHREN UND VORRICHTUNG ZUR HERSTELLUNG EINES SCHWEISSDRAHTES**

(30) Priorität: 12.04.2017 DE 102017003597
(71) Anmelder: Linde Aktiengesellschaft, 80331 München (DE)
(72) Erfinder: Heimbokel, Jens, 25495 Kummerfeld (DE)

(57) **Zusammenfassung**

Die Erfindung betrifft einen Schweißdraht, eine Schweißvorrichtung, ein Verfahren zum Schweißen, ein Herstellungsverfahren sowie eine Vorrichtung, die dafür eingerichtet ist, ein Herstellungsverfahren durchzuführen. Bei dem Verfahren zum Schweißen wird ein Schweißdraht (1) mit wenigstens einer Markierung (2) zum Anzeigen eines Abstandes (3) vom Drahtende verwendet, wobei die Markierung (2) des Schweißdrahtes (1) erfasst wird, ein Drahtendesignal ausgegeben und ein Alarm ausgelöst wird.

## Beschreibung

Die Erfindung betrifft einen Schweißdraht, eine Schweißvorrichtung, ein Verfahren zum Schweißen, ein Herstellungsverfahren sowie eine Vorrichtung zur Herstellung eines Schweißdrahtes.

### Stand der Technik

Beim sogenannten Metallschutzgasschweißen (MSG) und Wolframschutzgasschweißen (WSG) wird ein Zusatzwerkstoff, ein Schweißdraht, mit Hilfe von mechanischen Fördereinrichtungen (Drahtvorschub) von einer Drahtrolle (Korbspuhle) oder aus einem Drahtfass in verschiedenen Größen zur Schweißstelle gefördert. Der Schweißdraht wird kontinuierlich in einem Lichtbogen aufgeschmolzen, der zwischen dem Drahtende und dem zu schweißenden Werkstück brennt. Am Drahtende sich ausbildende Tropfen des geschmolzenen Drahtes lösen sich ab und bewegen sich in das Schmelzbad. Zum Schutz des sich ausbildenden Schmelzbads und ggf. auch der erstarrenden Schweißnaht vor Oxidation wird ein geeignetes Schutzgas eingesetzt, das den Schweißbereich abdeckt. Je nach Art des Schutzgases unterscheidet der Fachmann dabei zwischen Metall-Inertgas-Schweißen (MIG) und Metall-Aktivgas-Schweißen (MAG). Typischerweise werden dem MSG-Brenner der Schweißstrom, die Drahtelektrode, das Schutzgas und ggf. erforderliches Kühlwasser durch ein besonderes Schlauchpaket zugeführt.

Der Schweißzusatzwerkstoff bzw. die abschmelzende Drahtelektrode muss fortlaufend gefördert werden. Bei derartigen Einrichtungen wird daher der Schweißdraht mit Hilfe einer Drahtvorschubeinrichtung und einem in einer Halterung drehbar gelagerten Spulenkörper abgezogen. Die Drahtvorschubeinrichtung kann dabei aus einer angetriebenen Drahtförderrolle und einer Druckrolle bestehen. Um den Draht mit dem notwendigen Schweißstrom zu versorgen, passiert der Draht ein sogenanntes Stromkontaktrohr.

Zum Ende des Drahtes kann es zu Schweißnahtunregelmäßigkeiten und längeren Reparaturen kommen, da der Draht zurück brennen und am Stromkontaktrohr fest kleben kann. Dies geschieht, weil der Lichtbogen nach dem Zünden durch innere Regelung seine Länge sofort erreicht und bei verzögertem oder aufhörendem Dahrtvorschub in die Kontaktspitze hochbrennt. Der Schweißer muss den Vorgang unterbrechen und zusätzlich zum Tausch der Drahtrolle eine kleine Reparatur vornehmen. Dies kostet zusätzlich Zeit und somit Geld. Zudem werden Verschleißteile unnötig früh verbraucht.

Aufgabe der Erfindung ist demzufolge, die oben genannten Probleme zu vermeiden oder ganz zu überwinden.

### Offenbarung der Erfindung

Die Erfindung schlägt einen Schweißdraht, eine Schweißvorrichtung, die einen derartigen Schweißdraht verwendet, ein Verfahren zum Schweißen unter Verwendung eines derartigen Schweißdrahtes, ein Herstellungsverfahren für einen solchen Schweißdraht und eine Vorrichtung zur Herstellung eines solchen Schweißdrahts gemäß den unabhängigen Patentansprüchen vor. Vorteilhafte Ausgestaltungen ergeben sich aus den jeweiligen Unteransprüchen und der nachfolgenden Beschreibung.

### Vorteile der Erfindung

Erfindungsgemäß weist ein Schweißdraht für die genannten Schweißverfahren wenigstens eine Markierung zum Anzeigen eines Abstandes vom Drahtende auf.

Durch die Markierung wird beim Schweißen erkennbar, dass ein Drahtende kurz bevor steht. Auf diese Weise kann der Schweißdraht rechtzeitig ausgetauscht werden, bevor es zu unnötigen Stopps und Kosten durch Rückbrände und den damit verbundenen Reparaturen kommt. Weiterhin kann auch vermieden werden, dass der Schweißdraht zu früh getauscht und ein Drahtrest verschwendet wird. Damit kann die Wirtschaftlichkeit verbessert und die Umwelt durch bessere Ausnutzung von Ressourcen geschont werden.

Die Markierung kann zum Anzeigen eines Abstandes insbesondere von 1 - 50 m vom Drahtende, bevorzugt eines Abstandes von 1 - 20 m, weiter bevorzugt 5 - 15 m im (halb-)automatischen Betrieb und 10 - 50 m, weiter bevorzugt 20 - 40 m im manuellen Betrieb, vom Drahtende vorgesehen sein. Sie kann aber auch zum Anzeigen jedes beliebigen anderen vorgewählten Abstandes vorgesehen sein.
In einer vorteilhaften Ausführungsform ist die wenigstens eine Markierung optisch, mechanisch und/oder elektrisch wirksam. Dies ist vorteilhaft, da die Markierung auf diese Weise beim Schweißen optisch, mechanisch und/oder elektrisch vorzugsweise automatisch erfasst werden kann.

In einer weiteren vorteilhaften Ausführungsform umfasst die wenigstens eine Markierung wenigstens eine Signalkerbe. Eine Signalkerbe kann sowohl optisch als auch mechanisch erfasst werden. Vorteilhaft kann die wenigstens eine Markierung auch mehrere Signalkerben umfassen. So kann eine Sequenz von Signalkerben einen Abstand kodieren, so dass in verschiedenen Abständen vom Drahtende unterschiedliche Sequenzen von Signalkerben angeordnet sind. So kann beispielsweise eine solche Sequenz von Signalkerben in einem Abstand von 4,5-6,5 m vom Drahtende, eine weitere Sequenz von Signalkerben in einem Abstand von 2,5-3,5m vom Drahtende und eine weitere Sequenz von Signalkerben in einem Abstand von 0,5-1,5m vom Drahtende angeordnet sein. Auf diese Weise kann ein Schweißer in mehreren Etappen über ein bevorstehendes Drahtende informiert werden. Im manuellen Betrieb und/oder bei hohen Drahtvorschubgeschwindigkeiten können die genannten Abstände erhöht werden, bspw. verdoppelt, verdreifacht, vervierfacht etc, um ausreichende Reaktionszeiten sicherzustellen.

In einer weiteren vorteilhaften Ausführungsform umfasst die wenigstens eine Markierung wenigstens einen Farbstreifen. Ein Farbstreifen ist eine optische Markierung und kann vorteilhaft optisch erfasst werden. Es ist denkbar, dass in verschiedenen Abständen vom Drahtende verschiedenfarbige Markierungen vorgesehen sind.

In einer weiteren vorteilhaften Ausführungsform umfasst die wenigstens eine Markierung wenigstens eine Verjüngung des Drahtes. Eine Verjüngung ist sowohl optisch sichtbar als auch elektrisch wirksam, da der elektrische Widerstand an der Stelle der Verjüngung zunimmt. Dies ist vorteilhaft, da beim Schweißen mit dem Schweißdraht an der Stelle der Verjüngung der Schweißstrom abnimmt, wodurch der Schweißer darauf aufmerksam werden kann, dass ein Drahtende kurz bevorsteht.

In einer weiteren vorteilhaften Ausführungsform weist die wenigstens eine Markierung wenigstens eine Beschichtung auf. Beschichtungen sind elektrisch wirksam, da sie den Widerstand des Schweißdrahtes verändern. Dies ist vorteilhaft, da beim Schweißen mit dem Schweißdraht an der Stelle der Beschichtung sich der Schweißstrom verändert, wodurch der Schweißer darauf aufmerksam werden kann, dass ein Drahtende kurz bevorsteht.

Gemäß einem weiteren Aspekt der Erfindung wird eine Schweißvorrichtung zum Metallschutzgasschweißen mit einem Signalaufnehmer vorgeschlagen, wobei der Signalaufnehmer dafür eingerichtet ist, bei einem erfindungsgemäßen Schweißdraht wie oben beschrieben die Markierung zu erfassen und ein Drahtendesignal auszugeben. Dies ist vorteilhaft, da der Schweißer nun nicht mehr selber auf das bevorstehende Drahtende achten muss, sondern von dem Drahtendesignal über das bevorstehende Drahtende informiert werden kann.

Denkbar ist, dass der Signalaufnehmer als optischer Sensor ausgebildet ist. Dieser kann den Draht mit einer Lichtquelle optisch abtasten und wenn eine optisch wirksame Markierung erfasst wird, das Drahtendesignal ausgeben. Dies ist insbesondere dann vorteilhaft, wenn die Markierung als Farbstreifen oder als wenigstens eine Signalkerbe ausgebildet ist.

Es ist jedoch auch denkbar, dass der Signalaufnehmer ein Strommessgerät umfasst, das den Schweißstrom misst und eine Veränderung der Schweißstromstärke erfasst. Dies ist insbesondere vorteilhaft, wenn die Markierung elektrisch wirksam ist, insbesondere wenn sie wenigstens eine Verjüngung des Drahtes oder wenigstens eine Beschichtung umfasst. Vorteilhaft kann der Signalaufnehmer auch räumlich vor einem Stromkontaktrohr angeordnet sein und mit einer Spannungsquelle als Widerstandsmessgerät ausgebildet sein, das einen Widerstand des Schweißdrahtes während des Betriebs fortlaufend misst und auf diese Weise eine Änderung des Widerstands erfasst und dann ein Drahtendesignal ausgibt.

In einer weiteren vorteilhaften Ausführungsform umfasst die Schweißvorrichtung weiterhin eine Steuereinrichtung, die dafür eingerichtet ist, das Drahtendesignal zu erfassen und einen Alarm auszulösen. Dies ist vorteilhaft, da auf diese Weise eine Information an den Schweißer über das bevorstehende Drahtende bereitgestellt wird. Der "Alarm" kann ein optisches akustisches und/oder Vibrationssignal sein.

In einer weiteren vorteilhaften Ausführungsform umfasst die Schweißvorrichtung weiterhin eine Anzeigevorrichtung in Form einer webbasierten (Cloud)-Anwendung ("App") und/oder einer Anzeigevorrichtung an einem Schweißhelm, die dafür eingerichtet ist, den Alarm anzuzeigen. Dies ist vorteilhaft, da auf diese Weise der Alarm an der Stelle angezeigt werden kann, wo die Information benötigt wird. Bei einer automatisierten Schweißvorrichtung kann der Alarm vorteilhaft in einer Steuerzentrale bei einer Schweißaufsicht angezeigt werden. Bei manuellem Schweißen kann der Alarm vorteilhaft an einem Schweißhelm (im Visier des Helms) angezeigt werden.

In einer weiteren vorteilhaften Ausführungsform umfasst die Schweißvorrichtung einen Schweißbrenner, der dazu eingerichtet ist, bei Auslösen des Alarms zu vibrieren. Denkbar ist auch, dass eine andere Komponente der Schweißvorrichtung vibriert. Dies ist vorteilhaft, da der Schweißer auf diese Weise direkt darauf aufmerksam gemacht wird, dass ein Drahtende kurz bevorsteht. Denkbar ist auch, dass die Schweißvorrichtung einen Lautsprecher umfasst, der dazu eingerichtet ist, bei Auslösen des Alarms ein akustisches Alarmsignal auszugeben. Dies ist vorteilhaft, da der Schweißer auf diese Weise direkt über das bevorstehende Drahtende informiert wird.

Gemäß einem weiteren Aspekt der Erfindung wird ein Verfahren zum Schweißen vorgeschlagen, wobei ein Schweißdraht mit wenigstens einer Markierung zum Anzeigen eines Abstandes vom Drahtende verwendet wird, wobei die Markierung des Schweißdrahtes erfasst, ein Drahtendesignal ausgegeben und ein Alarm ausgelöst wird. Dies ist vorteilhaft, da auf diese Weise Stopps und Kosten durch Rückbrände und die damit verbundenen Reparaturen verhindert werden können, da ein Drahtende rechtzeitig erfasst wird. Bevorzugt wird ein Schweißdraht wie oben beschrieben verwendet.

In einer weiteren vorteilhaften Ausführungsform wird für das Verfahren eine Schweißvorrichtung wie oben beschrieben verwendet. Dabei wird die Markierung des Schweißdrahtes bevorzugt von dem Signalaufnehmer erfasst, durch den vorteilhafterweise auch das Drahtendesignal ausgegeben wird. Weiterhin wird das Drahtendesignal bevorzugt an eine Steuervorrichtung weitergegeben, die den Alarm auslöst.

Gemäß einem weiteren Aspekt der Erfindung wird ein Herstellungsverfahren für einen Schweißdraht wie oben beschrieben vorgeschlagen, wobei der Schweißdraht mit wenigstens einer Markierung zum Anzeigen eines bevorstehenden Drahtendes versehen wird. Dies ist vorteilhaft, da so der Schweißdraht wie oben beschrieben hergestellt werden kann.

Gemäß einem weiteren Aspekt der Erfindung wird eine Vorrichtung vorgeschlagen, die dafür eingerichtet ist, ein Herstellungsverfahren wie oben beschrieben durchzuführen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einiger Ausführungsbeispiele in den Zeichnungen schematisch dargestellt und wird im Folgenden unter Bezugnahme auf die Zeichnungen beschrieben.

Kurze Beschreibung der Zeichnungen
- Fig. 1: zeigt eine Ausführungsform eines erfindungsgemäßen Schweißdrahtes mit einer Drahtrolle,
- Fig. 2A-2D: zeigen jeweils einen Ausschnitt einer Ausführungsform eines erfindungsgemäßen Schweißdrahtes und
- Fig. 3: zeigt eine Ausführungsform einer erfindungsgemäßen Schweißvorrichtung.

### Ausführliche Figurenbeschreibung

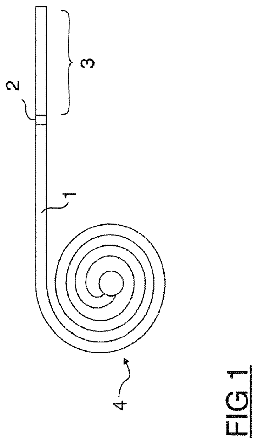

In Figur 1 ist ist eine Ausführungsform eines erfindungsgemäßen Schweißdrahtes 1 mit einer Drahtrolle 4 schematisch dargestellt. Der Schweißdraht 1 weist eine Markierung 2 in einem Abstand 3 vom Drahtende auf.

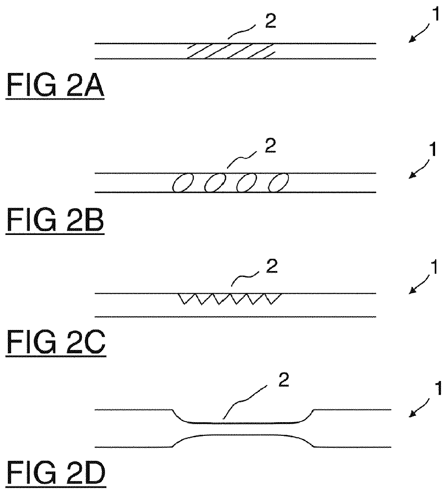

Figur 2A zeigt einen Ausschnitt einer Ausführungsform des Schweißdrahtes 1. Dabei zeigt die schraffierte Fläche einen Farbstreifen als Markierung 2 an.

In Figur 2B sind Signalkerben als Markierung 2 des Schweißdrahtes 1 vorgesehen.

In Figur 2C ist eine mechanische Riffelung als Markierung 2 des Schweißdrahtes 1 vorgesehen.

In Figur 2D ist eine Verjüngung als Markierung 2 des Schweißdrahtes 1 vorgesehen.

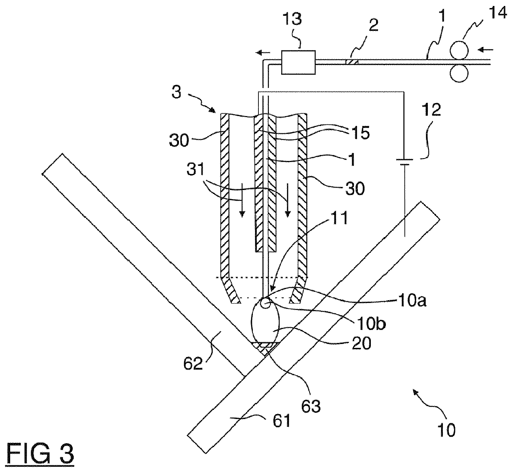

In Figur 3 ist eine Ausführungsform einer erfindungsgemäßen Schweißvorrichtung 10 dargestellt.

Die Schweißvorrichtung 10 ist schematisch in Teilansicht im Längsschnitt dargstellt. Hierbei kann es sich um ein Metallschutzgas-Schweißgerät (MSG-Schweißgerät) handeln. Mittels dieses Schweißgeräts bzw. dieser Schweißvorrichtung 10 wird durch den Fügevorgang des Verschweißens ein erstes Werkstück 61 mit einem zweiten Werkstück 62 verschweißt.

Die Schweißvorrichtung 10 weist eine Drahtelektrode in Form eines Schweißdrahts 1 auf. Der Schweißdraht 1 ist von einer Stromkontakthülse 15 umschlossen. Zwischen dem ersten Werkstück 61 und der Stromkontakthülse 15 ist eine elektrische Spannung angelegt, die von der Spannungsquelle 12 erzeugt wird. Ein Lichtbogen 20 wird durch Kontaktzündung iniziiert und brennt zwischen der Drahtelektrode 1 und dem ersten Werkstück 61. Durch die hohen Temperaturen wird die Drahtelektrode bzw. der Schweißdraht 1 an seiner Spitze 11 aufgeschmolzen. Der Tropfen aufgeschmolzenen Drahts ist mit 10b, das Ende der nicht abgeschmolzenen Drahtelektrode 1 ist mit 10a bezeichnet. Der sich lösende Tropfen 10b geht in das Schmelzbad 63 über und bildet die Schweißnaht (Fügeverbindung zwischen den Werkstücken 61 und 62). Der Draht 1 wird dabei kontinuierlich mittels einer Fördereinrichtung 14 nachgeführt. Die Schweißvorrichtung 10 weist einen Brenner 3 mit einer Schutzgasdüse 30 auf, um ein Schutzgas 31 zur Schweißnaht bzw. zum Schmelzbad 63 zu führen.

Die Schweißvorrichtung 10 weist außerdem einen Signalaufnehmer 13 auf, der dafür eingerichtet ist, bei dem Schweißdraht 1 mit der Markierung 2 diese Markierung beim Durchlaufen des Schweißdrahts 1 durch den Signalaufnehmer 13 zu detektieren und ein Drahtendesignal auszugeben. Vorzugsweise ist der Signalaufnehmer 13 in Drahtvorschubrichtung vor der Stromkontakthülse 15 angeordnet. Das rechtzeitige Erfassen des bevorstehenden Drahtendes vermeidet eine Überhitzung des Drahtes mit der möglichen Folge des Anbackens an die Stromkontakthülse 15 und führt somit zu den bereits oben erwähnten Vorteilen.

## Patentansprüche

1. Schweißdraht (1) mit wenigstens einer Markierung (2) zum Anzeigen eines Abstandes (3) vom Drahtende.

2. Schweißdraht (1) nach Anspruch 1, wobei die wenigstens eine Markierung (2) optisch, mechanisch und/oder elektrisch wirksam ist.

3. Schweißdraht (1) nach Anspruch 2, wobei die wenigstens eine Markierung (2) wenigstens eine Signalkerbe umfasst.

4. Schweißdraht (1) nach Anspruch 2 oder 3, wobei die wenigstens eine Markierung (2) wenigstens einen Farbstreifen umfasst.

5. Schweißdraht (1) nach einem der Ansprüche 2 bis 4, wobei die wenigstens eine Markierung (2) wenigstens eine Verjüngung des Drahtes umfasst.

6. Schweißdraht (1) nach einem der Ansprüche 2 bis 5, wobei die wenigstens eine Markierung (2) wenigstens eine Beschichtung aufweist.

7. Schweißvorrichtung (10) zum Metallschutzgasschweißen mit einem Signalaufnehmer (13), wobei der Signalaufnehmer (13) dafür eingerichtet ist, bei einem Schweißdraht (1) nach einem der Ansprüche 1 bis 6 die wenigstens eine Markierung (2) zu erfassen und ein Drahtendesignal auszugeben.

8. Schweißvorrichtung (10) nach Anspruch 7, weiter umfassend eine Steuereinrichtung, die dafür eingerichtet ist, das Drahtendesignal zu erfassen und einen Alarm auszulösen.

9. Schweißvorrichtung (10) nach Anspruch 8, weiter umfassend eine Anzeigevorrichtung in Form einer webbasierten Anwendung und/oder einer Anzeigevorrichtung an einem Schweißhelm, die dafür eingerichtet ist, den Alarm anzuzeigen.

10. Schweißvorrichtung (10) nach Anspruch 8 oder 9, die einen Schweißbrenner (3) umfasst, der dazu eingerichtet ist, bei Auslösen des Alarms zu vibrieren, wenn die Steuereinrichtung einen Alarm auslöst.

11. Verfahren zum Schweißen, wobei ein Schweißdraht (1) mit wenigstens einer Markierung (2) zum Anzeigen eines Abstandes (3) vom Drahtende verwendet wird, wobei die Markierung (2) des Schweißdrahtes (1) erfasst, ein Drahtendesignal ausgegeben und ein Alarm ausgelöst wird.

12. Verfahren nach Anspruch 11, wobei eine Schweißvorrichtung (10) nach einem der Ansprüche 7 bis 10 verwendet wird.

13. Herstellungsverfahren für einen Schweißdraht (1) nach einem der Ansprüche 1 bis 6, wobei der Schweißdraht (1) mit wenigstens einer Markierung (2) zum Anzeigen eines Abstandes (3) vom Drahtende versehen wird.

14. Vorrichtung, die dafür eingerichtet ist, ein Herstellungsverfahren nach Anspruch 13 durchzuführen.
